# EUROPEAN PATENT SPECIFICATION

(11) **EP 2 507 303 B1**
(45) Date of publication and mention of the grant of the patent: **20.11.2013**
(21) Application number: 10784996.0
(22) Date of filing: 01.12.2010
(51) Int. Cl.: C08J 3/22, C08K 5/098

(54) **ULTRA HIGH MOLECULAR WEIGHT POLYETHYLENE POWDER COMPOSITION**
POLYETHYLENZUSAMMENSETZUNG MIT ULTRAHOHEM MOLEKULARGEWICHT
COMPOSITION DE POLYÉTHYLÈNE À POIDS MOLÉCULAIRE TRÈS ÉLEVÉ

(30) Priority: 02.12.2009 EP 09075533
(43) Date of publication of application: 10.10.2012
(73) Proprietor: Saudi Basic Industries Corporation, Riyadh 11422 (SA)
(72) Inventor: DE VOS, Roelof, Franciscus, Gerardus, Maria, NL-6160 GA Geleen (NL); VAN BEEK, Dimphna, Johanna, Maria, NL-6160 GA Geleen (NL)
(74) Representative: Vroemen, Maurice
(86) International application number: PCT/EP2010/007289
(87) International publication number: WO 2011/066956

(56) References cited:
- EP-A1- 0 661 340
- EP-A2- 0 841 374
- US-A- 4 060 512

## Description

The present invention relates to an ultra high molecular weight polyethylene powder composition.

The catalytic production of polyethylene is known in the art. A special class of polyethylene is ultra high molecular weight polyethylene (UHMWPE) with a very high average molecular weight ranging from about 1.000.000 to well above 10.000.000 grams/mole whereas high density polyethylene (HDPE) typically has a molar mass between about 50.000 and 300.000 g/mol. The polymer synthesis to obtain UHMWPE is disclosed in for example Journal of Macromolecular Science Part C Polymer Reviews (Vol. C42, No 3, pp 355-371, 2002; Ultra high molecular weight polyethylene by Kelly). The higher molecular weight gives UHMWPE the unique combination of characteristics making it suitable for applications where lower molecular weight grades fail. The very high molecular weight results in excellent properties for example a very high abrasion resistance, a high chemical resistance, a very high impact resistance and a low dynamic coefficient of friction. Because of the very high molecular weight, the bad flowability of the UHMWPE powder, and because of the high melt viscosity, specialized processing methods like compression moulding and ram extrusion are applied. UHMWPE is processed from powder via, for example, sheets, bars or rods into the end application.

As mentioned, typical processing procedures are ram extrusion and compression moulding. Both methods in principle involve sintering of the powder particles at high temperature, high pressure and long residence times (Stein; Engineered Materials Handbook, Volume 2: Engineering Plastics, ASM International 1999; pages 167-171). Consequently, the powder properties heavily influence the UHMWPE production process as well as the converting process. The bulk density, the particle size distribution and the particle shape of the powder are very important because they determine the storage, the transportability and the handling, for example the filling of the moulds before converting. A higher bulk density in combination with a free flowability of the powder allows an increased storable amount per unit volume which is very advantageous for powder handling. In addition, a free flowing high bulk density powder may decrease clogging during handling and transportation.

In the case that the UHMWPE powder is produced with a Ziegler Natta based catalyst this polymer may contain chlorine comprising catalyst residues. As indicated, UHMWPE is mainly converted by the use of ram extrusion and compression moulding in which high temperatures, high pressures and very long residence times (in comparison with common polyethylene converting) are applied. The combination of the presence of chlorine, a high processing temperature and the presence of moisture displays the negative property to corrode the metal of moulds used for the conversion of UHMWPE powder into a UHMWPE sheet and may result in discoloration (yellowing) of the end application.

A small amount of corrosion inhibitor may be added to the UHMWPE virgin or base resin powder produced after the polymerization process to neutralise the chlorine residues thereby preventing corrosion during conversion to sheets, bars or rods. Corrosion inhibitors for example chloride/acid acceptors and/or scavengers may be added in small amounts, for example in the range between 0.01-0.50 percent by weight, to the dry virgin or base polymer powder. Examples of suitable acid scavengers include inorganic products for example hydrotalcite, hydrocalumite, oxides such as zinc oxide and organic products for example metallic soaps such as metallic stearates for example calcium stearate and zinc stearate.

It is an object of the present invention to improve the corrosion behaviour during conversion of UHMWPE powder while maintaining other required properties of UHMWPE powder for example the flowability of the powder and the abrasion resistance of the end product.

The improvement of the corrosion behaviour is achieved with an ultra high molecular weight polyethylene powder composition comprising precipitated magnesium salt of a carboxylic acid.

These precipitated magnesium salts of a carboxylic acid act as acid scavengers.

Furthermore the free flowing properties of the UHMWPE powder are positively influenced by the presence of these precipitated magnesium salts.

It is an additional advantage of the precipitated magnesium salt of a carboxylic acid that said salt reduces the yellow discoloration of the visible parts of products based on UHMWPE.

Suitable carboxylic acids include mono-, di -, or tricarboxylic acids and suitable magnesium salts include magnesium salts of the mono-, di-, or tricarboxylic acid. Also mixtures of these acids and these salts are possible.

Preferably the salts have a melting point less than 190°C.

The carboxylic salt may be saturated or unsatured.

Preferably the salt is a saturated compound.

Preferably the carboxylic acid is selected from the group consisting of saturated carboxylic acids comprising between 1 and 40 carbon atoms.

According to a preferred embodiment of the invention the carboxylic acid is selected from the group consisting of saturated carboxylic acids comprising between 1 and 22 carbon atoms.

Suitable acids include for example formic acid, acetic acid, propionic acid, butyric acid, valeric acid, caproic acid, caprylic acid, pelargonic acid, capric acid, lauric acid, myristic acid, palmitic acid, stearic acid, arachidic acid and/or behenic acid.

According to a preferred embodiment of the invention the carboxylic acid is stearic acid.

Most preferably the precipitated magnesium salt of a carboxylic acid is precipitated magnesium stearate.

In order to maintain flowability of the powder composition and the mechanical properties such as abrasion resistance and impact of the end application, it is of importance that the added corrosion inhibitor is homogeneously dispersed on a molecular level within the UHMWPE powder. As a result, the aspect ratio length/diameter and the morphology of the corrosion inhibitor play an important role. The morphology is determined by the production process of the corrosion inhibitor.

As disclosed by Zweifel et al in Plastics Additives Handbook ( pages 517-520; 6th edition, Carl Hanser Verlag ; ISBN 978-1-56990-430-5) a metal stearate may be prepared by means of a direct process or via a precipitation process.

The solid magnesium salt of a carboxylic acid to be applied in the present invention is obtained via the precipitation process. Products obtained with the direct process are not suitable.

The precipitation reaction results in tiny particles with an uniform and narrow particle size distribution and a regular shape. Generally the flake like morphology of the metal stearate obtained with the precipitation process has an aspect ratio length/diameter for example higher than 5. In contrast products obtained via the direct process have a broader distribution and an aspect ratio length/diameter of about 1.

Generally the applied amount of the precipitated magnesium salt of the carboxylic acid salt depends on the amount of chlorine and the desired value for the flow properties of the powder. The amount may range between 0.1 and 5000 ppm relative to the UHMWPE end composition.

According to a preferred embodiment of the invention the amount of the precipitated magnesium salt of a carboxylic acid ranges between 1 and 2000 ppm relative to UHMWPE. More preferably this amount ranges between 100 and 500 ppm relative to UHMWPE.

Generally, the addition of corrosion inhibitors to UHMWPE may be performed via a batch mixing process or via a continuous mixing process.

In the case of a batch mixing process, the precipitated magnesium salt of a carboxylic acid may be added as component directly to the obtained UHMWPE powder by a homogeneous mixing process. The mixing process may take place with powder mixers as described for example by Harnby et al, Mixing in the Process Industries, second edition, 1992, pages 42-61 (ISBN 0750611103).

As the amounts of magnesium salt of a carboxylic acid in the final UHMWPE powder composition ranges between 0.1 and 5000 ppm relative to UHMWPE , direct dosing of these very low amounts can result in non-homogenous distribution of the corrosion inhibitor in the final UHMWPE composition.

It is a further object of the invention to provide a process to distribute magnesium salt of a carboxylic acid in the final UHMWPE powder composition homogeneously. As the amounts of acid scavenger are very small and the acid scavenger itself is not free flowing it is a challenge to dose this directly into a continuous production stream while obtaining a homogeneous mixture.

This problem is solved by a process wherein the magnesium salt of a carboxylic acid is added by means of a free flowing master fluff comprising the precipitated magnesium salt of a carboxylic acid and virgin UHMWPE powder into the continuous mixing stream of virgin UHMWPE powder.

Suitable examples of the continuous mixing equipment are the thrust and turbulent mixer types with for example a vortex screw or with mixing ribbons.

Preferably, the free flowing master fluff comprises between 0.1 and 10.0 % by weight of precipitated magnesium salt of a carboxylic acid and between 99.9 and 90.0 % by weight of virgin UHMWPE powder.

The virgin UHMWPE powder used in the free flowing master fluff is unmodified and does not comprise any additives.

The master fluff may comprise additives for example a corrosion inhibitor, an acid scavenger, a (UV) stabiliser, an antioxidant, a lubricant, an antimicrobial, a colorant, a pigment, a whitener, a crosslinker, a filler, an antifogging agent , an antistatic and/or a flame retardant.

The master fluff comprises virgin UHMWPE powder and the precipitated magnesium salt of a carboxylic acid as a very well homogeneous dispersed mixture without agglomerates or aggregates on micro scale.

The master fluff shows an excellent and stable homogeneity, good flowability, non sticky behaviour, no clustering and no segregation during handling and storage.

The addition of the free flowing master fluff to the virgin UHMWPE powder results in a free flowing UHMWPE powder composition.

The precipitated magnesium salt of a carboxylic acid is homogenously distributed in the final UHMWPE powder composition thus all UHMWPE powder is treated with the salt.

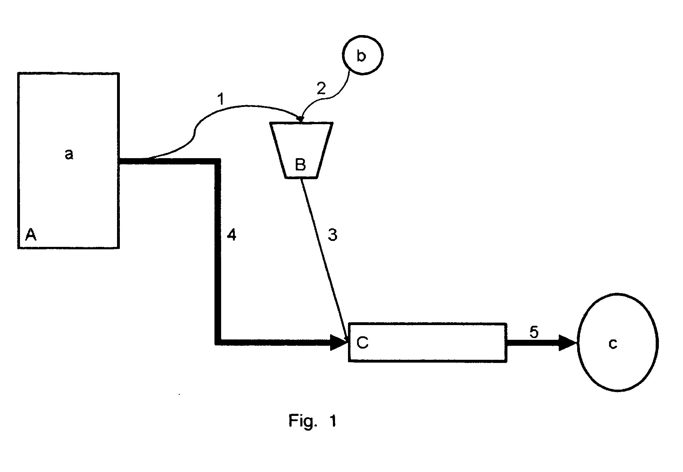

Figure 1 shows a schematic overview of the process directed to the addition of the master fluff to the virgin UHMWPE powder obtaining the final UHMWPE powder composition wherein:
A. =continuous polymerisation reactor
B. =batch mixing equipment
C. =continuous mixing equipment
   a. =virgin UHMWPE powder
   b. =precipitated magnesium stearate
   c. =homogeneous dispersed mixture of UHMWPE and magnesium stearate
      1. =virgin UHMWPE powder
      2. = precipitated magnesium stearate
      3. =master fluff
      4. =virgin UHMWPE powder
      5. =homogeneous dispersed mixture of UHMWPE and magnesium stearate.

The virgin UHMWPE powder 4 is produced in the continuous polymerisation reactor A.

The master fluff 3 is obtained by mixing virgin UHMWPE 1 and precipitated magnesium stearate 2 in batch mixing equipment B.

The continuous addition of the master fluff 3 and the addition of virgin UHMWPE powder 4 to the continuous powder mixing equipment C is an efficient method to distribute the precipitated magnesium stearate homogeneously in polymer powder during the continuous process of UHMWPE production and to obtain a homogeneous dispersed mixture 5 of UHMWPE and magnesium stearate.

The virgin UHMWPE may have the following characteristics:
- an average molecular weight higher than 500.000 g/mole
- an average particle size (D₅₀) in the range between 50 and 250 micrometer and
- a bulk density in the range between 350 and 600 kg/m³

The compositions according to the present invention can be applied for example in the production of rods, tubes, bars and more intricate continuous profiles by ram extrusion and large sheets by compression moulding.

EP661340A discloses a polyethylene molding material having a viscometrically measured average molecular weight of at least 106 g/mol, wherein said molding material contains 0.05 to 5.0% by weight, based on the molding material, of a salt of a higher monocarboxylic acid or of a mixture of such salts, the salt or the salt mixture melts at between 80 and 220 degrees Celcius and the melt viscosity of the salt or the salt mixture at the processing temperature of the molding material is not more than 50 Pa.s. Consequently the product is not applied as a powder at room temperature because it is applied n the melt at a temperature higher than 80 degrees Celcius. EP661340A does not disclose a master fluff. EP661340A discloses non-precipitated non free flowing salts of a carboxylic acid and EP661340A does nowhere suggest applying a precipitated magnesium salt of a carboxylic acid. EP661340A is directed to the problems in the production of thick-walled and larger profiles. Their surface frequently exhibits transverse cracks. The problem is solved by the addition of very particular lubricants selected from a large number of different compounds. These compounds prevent the formation of transverse cracks in the ram extrusion of UHMWPE. The salts of the higher monocarboxylic acids are derived from acids having 10 to 24 carbon atoms and are applied as a processing aid to prevent cracking of the article. Zinc stearate is the preferred additive. EP661340A is not directed to the improvement of corrosion behaviour and also not directed to the improvement of the colour.

The invention will be elucidated by means of the following non-restrictive examples.

### Examples

The following components were applied in the examples:
1. UHMWPE 1 comprising 10 ppm chlorine; bulk density = 480 kg/m³, D₅₀ = 150 µm and the average molecular weight is about 5.000.000 g/mol
2. UHMWPE 2 comprising 30 ppm chlorine; bulk density = 480 kg/m³, D₅₀ = 150 µm and the average molecular weight is about 5.000.000 g/mol
3. precipitated magnesium stearate: Ligamed MF-3-V
4. precipitated calcium stearate: Liga calcium stearate CPR5

22.5 mg of the metalstearate was added to 45 gram of UHMWPE powder by gentle mixing to obtain a master fluff containing 500 ppm metal stearate. To 15 gram of this master fluff 15 gram of UHMWPE was added to 15 gram of this master fluff to obtain a mixture of UHMWPE containing 250 ppm metal stearate.

A corrosion test was performed using a Pico test. This test is a method in which corrosion of steel can be investigated based on a small amount of polymer powder (15 g). The set-up of the test consists of a metal cylinder in which at the bottom and at the top steel discs (in these examples Steel 52) are mounted. The upper and lower parts of the cylinder are heated separately. The cylinder is loaded for 1/3 with polymer powder, which is thereby in contact with the bottom steel disc (and is not in contact with the upper steel disc). The bottom part is heated above the melting temperature of the polymer powder (200 °C). The upper part is heated to a temperature of 100 °C, which is below the condensation temperature of hydrochloric acid (117 °C). Using this set-up it is possible to determine the effectivity of the acid-scavenger present in the polymer powder. The effects of direct contact with steel and also the presence of vapour is investigated. The discs are exposed for 24 hrs to the polymer and vapour. Thereafter, the polymer powder is removed, the discs are rinsed and the weight loss is measured, which is then calculated towards a corrosion rate.

The corrosion rates are based on the weight loss of the upper discs in contact with the vapour.
Table I summarises the compositions and the results of the corrosion test.

**Table I**

| Example | UHMWPE | Chlorine [ppm] | Ca-stearate [ppm] | Mg-stearate [ppm] | Corrosion [mm/yr] |
|---|---|---|---|---|---|
| A | 1 | 10 | 0 | 0 | 0.6 |
| B | 1 | 10 | 250 | - | 0.7 |
| I | 1 | 10 | - | 250 | 0.3 |
| C | 1 | 10 | 500 | - | 0.4 |
| II | 1 | 10 | - | 500 | 0.3 |
| D | 2 | 30 | 0 | 0 | n.d |
| E | 2 | 30 | 250 | - | 1.0 |
| III | 2 | 30 | - | 250 | 0.4 |
| F | 2 | 30 | 500 | - | 0.4 |
| IV | 2 | 30 | - | 500 | 0.1 |

Comparing the use of precipitated calcium stearate and precipitated magnesium stearate Table I shows that the corrosion properties are much better in the case that precipitated magnesium stearate is applied. In general, no corrosion could be observed for the steel discs that were in close contact with the polymer powder (bottom discs).This means that there is no corrosion of moulds during conversion into for example rods, sheets or bars.
In the presence of 10 ppm chlorine magnesium stearate is a more effective acid scavenger than calcium stearate as shown by the lower corrosion value when comparing
- Example I and Comparative Example B dosing 250 ppm metal stearate and
- Example II and Comparative Example C dosing 500 ppm metal stearate. In the presence of 30 ppm chlorine precipitated magnesium stearate is a more effective acid scavenger than precipitated calcium stearate as shown by the lower corrosion value when comparing
- Example III and Comparative Example E dosing 250 ppm metal stearate and
- Example IV and Comparative Example F dosing 500 ppm metal stearate.

Generally a higher corrosion rate is observed for UHMWPE containing 30 ppm chlorine (Comparison of the (comparative) examples B and E; I and III and C and F).

The compositions of UHWMPE and precipitated metal-stearate as shown in Table 1 were used to perform colour measurements during ageing at elevated temperature in a circulation oven. The powders were compression molded into sheets at a temperature of 200 °C. After measuring the reference b* value (t=0 days), the sheets were positioned vertically in a circulation oven at a constant temperature of 110 °C. Colour was measured after 10, 14, and 21 days, respectively.

The experiments were performed in duplo, the values as indicated in Table II are the average of the duplo experiment.

The determination of the b*-value (according to CIELAB (ASTM D6290-05) en ASTM E313-05) was performed using a BYK-Gardner ColorView 9000. Negative b* values correspond to a blue colour, while positive b* values correspond to a yellow colour. Here in comparison between products, a lower b* value indicates a less yellow product.

Table II summarises the compositions and the results of the ageing and colour test.

**Table II**

| Example | UHMWPE | Chlorine [ppm] | Ca-stearate [ppm] | Mg-stearate [ppm] | b* value | | | |
|---|---|---|---|---|---|---|---|---|
| | | | | | 0 days | 10 days | 14 days | 21 days |
| A | 1 | 10 | 0 | 0 | -1.1 | 5.3 | 10.0 | 17.2 |
| B | 1 | 10 | 250 | - | -1.2 | 11.5 | 18.2 | 25.8 |
| I | 1 | 10 | - | 250 | -1.4 | 10.0 | 15.8 | 24.2 |
| C | 1 | 10 | 500 | - | -1.8 | 6.3 | 10.4 | 15.8 |
| II | 1 | 10 | - | 500 | -1.6 | 7.4 | 11.6 | 16.8 |
| D | 2 | 30 | 0 | 0 | 2.4 | 4.7 | 9.4 | 16.2 |
| E | 2 | 30 | 250 | - | -2.0 | 7.7 | 13.2 | 20.3 |
| III | 2 | 30 | - | 250 | -1.9 | 7.9 | 13.0 | 19.7 |
| F | 2 | 30 | 500 | - | -1.5 | 6.4 | 10.7 | 16.9 |
| IV | 2 | 30 | - | 500 | -1.6 | 6.6 | 10.6 | 16.2 |

Regarding the results with respect to colour and with respect to corrosion in Table I and Table II the addition of precipitated magnesium stearate gives the best result for the combination of colour and corrosion requirements.

## Claims

1. Ultra high molecular weight polyethylene powder composition comprising precipitated magnesium salt of a carboxylic acid.

2. Ultra high molecular weight polyethylene powder composition according to Claim 1 wherein the carboxylic acid is a saturated carboxylic acid comprising between 1 and 40 carbon atoms.

3. Ultra high molecular weight polyethylene powder composition according to any one of Claims 1-2 wherein the precipitated magnesium salt of a carboxylic acid is precipitated magnesium stearate.

4. A process for the addition of a precipitated magnesium salt of a carboxylic acid to ultra high molecular weight polyethylene **characterised in that** a master fluff comprising virgin ultra high molecular weight polyethylene and precipitated magnesium salt of a carboxylic acid is added to virgin ultra high molecular weight polyethylene.

5. A process according to Claim 4 **characterised in that** the precipitated magnesium salt of a carboxylic acid is precipitated magnesium stearate.

6. A process according to any one of Claims 4-5 **characterised in that** the master fluff is added to ultra high molecular weight polyethylene in continuous mixing equipment.

7. Use of ultra high molecular weight polyethylene according to any one of Claims 1-3 and use of ultra high molecular weight polyethylene obtained with the process according to any one of Claims 4-6 in rods, tubes, bars, profiles and sheets.

## Patentansprüche

1. Pulverzusammensetzung von ultrahochmolekularem Polyethylen, umfassend gefälltes Magnesiumsalz einer Carbonsäure.

2. Pulverzusammensetzung von ultrahochmolekularem Polyethylen nach Anspruch 1, wobei es sich bei der Carbonsäure um eine gesättigte Carbonsäure mit zwischen 1 und 40 Kohlenstoffatomen handelt.

3. Pulverzusammensetzung von ultrahochmolekularem Polyethylen nach einem der Ansprüche 1-2, wobei es sich bei dem gefällten Magnesiumsalz einer Carbonsäure um gefälltes Magnesiumstearat handelt.

4. Verfahren für die Zugabe eines gefällten Magnesiumsalzes einer Carbonsäure zu ultrahochmolekularem Polyethylen, **dadurch gekennzeichnet, dass** man einen Masterstaub, der frisches ultrahochmolekulares Polyethylen und gefälltes Magnesiumsalz einer Carbonsäure umfasst, zu frischem ultrahochmolekularem Polyethylen gibt.

5. Verfahren nach Anspruch 4, **dadurch gekennzeichnet, dass** es sich bei dem gefällten Magnesiumsalz einer Carbonsäure um gefälltes Magnesiumstearat handelt.

6. Verfahren nach einem der Ansprüche 4-5, **dadurch gekennzeichnet, dass** man den Masterstaub in einer kontinuierlichen Mischeinrichtung zu ultrahochmolekularem Polyethylen gibt.

7. Verwendung von ultrahochmolekularem Polyethylen nach einem der Ansprüche 1-3 und Verwendung von mit dem Verfahren nach einem der Ansprüche 4-6 erhaltenem ultrahochmolekularem Polyethylen in Stäben, Rohren, Stangen, Profilen und Platten.

## Revendications

1. Composition de poudre de polyéthylène de masse moléculaire très élevée comprenant du sel de magnésium d'un acide carboxylique précipité.

2. Composition de poudre de polyéthylène de masse moléculaire très élevée selon la revendication 1 dans laquelle l'acide carboxylique est un acide carboxylique saturé comprenant entre 1 et 40 atomes de carbone.

3. Composition de poudre de polyéthylène de masse moléculaire très élevée selon l'une quelconque des revendications 1-2 dans laquelle le sel de magnésium d'un acide carboxylique précipité est le stéarate de magnésium précipité.

4. Procédé pour l'ajout d'un sel de magnésium d'un acide carboxylique précipité à du polyéthylène de masse moléculaire très élevée **caractérisé en ce qu'**une poussière mère comprenant du polyéthylène de masse moléculaire très élevée vierge et du sel de magnésium d'un acide carboxylique précipité est ajoutée à du polyéthylène de masse moléculaire très élevée vierge.

5. Procédé selon la revendication 4 **caractérisé en ce que** le sel de magnésium d'un acide carboxylique précipité est le stéarate de magnésium précipité.

6. Procédé selon l'une quelconque des revendications 4-5 **caractérisé en ce que** la poussière mère est ajoutée au polyéthylène de masse moléculaire très élevée dans un équipement de mélange en continu.

7. Utilisation de polyéthylène de masse moléculaire très élevée selon l'une quelconque des revendications 1-3 et utilisation de polyéthylène de masse moléculaire très élevée obtenu avec le procédé selon l'une quelconque des revendications 4-6 dans des baguettes, des tubes, des barres, des profilés et des feuilles.
